# EUROPEAN PATENT SPECIFICATION

(11) **EP 3 157 280 B1**
(45) Date of publication and mention of the grant of the patent: **18.09.2019**
(21) Application number: 14881428.8
(22) Date of filing: 18.09.2014
(51) Int. Cl.: H04W 12/04, G06F 21/34, G06F 21/71, G06F 21/44, G06Q 20/10, G06F 21/77, G06Q 20/34, G06Q 20/36, G06Q 20/40, H04L 9/00

(54) **METHOD AND DEVICE FOR ACHIEVING REMOTE PAYMENT**
VERFAHREN UND VORRICHTUNG FÜR FERNZAHLUNGEN
PROCÉDÉ ET DISPOSITIF POUR RÉALISER UN PAIEMENT À DISTANCE

(30) Priority: 16.07.2014 CN 201410340074
(43) Date of publication of application: 19.04.2017
(73) Proprietor: ZTE Corporation, Shenzhen, Guangdong 518057 (CN)
(72) Inventor: WU, Chuanxi, Shenzhen Guangdong 518057 (CN)
(74) Representative: Aipex B.V.
(86) International application number: PCT/CN2014/086837
(87) International publication number: WO 2015/117323

(56) References cited:
- EP-A1- 1 818 848
- EP-A1- 2 199 992
- EP-A1- 2 518 670
- CN-A- 101 039 318
- CN-A- 101 699 892
- CN-A- 103 020 547
- US-A1- 2010 314 451
- US-B1- 8 151 345

## Description

### Technical Field

The present invention relates to the field of mobile payment, and more particularly to a remote payment implementation method and apparatus.

### Background of the Related Art

Along with the rapid popularization of smart phones, the mobile internet will rapidly develop accordingly. Mobile payment, serving as an important application of the mobile internet, is highly focused by the whole society based on convenience, shortcut and fashion of the mobile payment. The mobile payment is a mode of electronic payment also called as phone payment, and refers to transaction payment between both sides of a transaction for a certain commodity or service via a mobile communication network or a near field communication technology by taking a mobile terminal device as a carrier. According to different specific payment interaction flows, the mobile payment may be divided into near field payment and remote payment. The near field payment refers to a payment mode of a mobile terminal completing a payment process at a local place or by accessing a receipt network via a noncontact receiving terminal. The remote payment refers to a method for purchasing, by a user who does not face a merchant, a commodity or service on a payment application platform by using the mobile terminal, confirming payment by interaction between a wireless communication network and a background server, and completing payment processing at the server. The mobile payment market of China develops rapidly. It is shown, according to a report from an EnfoDesk, that the transaction scale of the mobile payment market will be expected to reach 385 billion Yuan RMB until 2014, and the scale of users will reach 0.387 billion, in which remote payment services occupy a majority of market shares.

At present, main forms of the remote payment include a remote payment based on Mobile Taobao and a remote payment based on an external card swiping device.

The payment based on Mobile Taobao refers to a method that a mobile terminal receives a short message and a user implements payment via the Internet. By using this solution, it is necessary to pre-establish a clientage, and a acquirer is responsible for managing the clientage. A specific flow substantially refers to that: when the user selects mobile phone payment, the user inputs a bound phone number; and, this mobile phone will receive a short message with a verification web page link, the web page is opened for related information about a bank card used for payment and a preset payment password, then the payment is completed after verification. The security level of this solution is moderate, and this solution is only suitable for micropayment or physical purchasing on a Business-to-Consumer (B2C) website. The payment based on Mobile Taobao does not meet the requirement of security for large payment and a higher security payment application related to the bank card.

The payment based on the external card swiping device refers to that: a card swiping device is inserted into an audio jack of a mobile phone or a tablet computer, the user completes a card swiping flow of a bank card on the card swiping device to complete payment. By using the mode of payment based on the external card swiping device, rich remote payment services may be enjoyed without opening an online bank. At present, the payment based on the external card swiping device is applied to a mobile terminal having an operating system such as iOS, Android, and so on. However, by means of an external card swiping payment mode, as long as the card swiping device is purchased, the card swiping process can be realized. It is necessary to increase the payment cost, and the development of the payment based on the external card swiping device is affected. Besides, using the external card swiping payment mode has a risk of maliciously collecting, by an imitated merchant, user bank card information by using the card swiping device, thus reducing the security of a payment environment.

Along with intelligence of a mobile phone, IP of a mobile network and diversification of a platform, the security problems of the mobile internet and the smart terminal emerge increasingly. The mobile network is a communication network established on an opened unreliable physical channel, and meanwhile, because a mobile network secure protocol has leaks, the mobile network is easily attacked by interception from wired and wireless environments, channel interception, fraud, and the like. Malicious programs, remote controls, network attacks and the like on a wired network are continuously spread to the mobile internet, and the mobile terminal and the payment services are closely related to user benefits, thus the problems of sensitive data leakage and account information stealing, which are caused by interception, card cloning, man-in-the-middle attack and the like, are serious increasingly.

As for the remote payment, due to involving large payment and transfer, this class of applications has higher security level requirements to feasibly guarantee the fund security of users. Moreover, in a transaction process, it is necessary to ensure the truth and effectiveness of the user identity and transaction requests, thus avoiding occurrences of stealing of an account, "fishing" and other circumstances. By means of the remote payment based on Mobile Taobao and the remote payment based on an external card swiping device, there are problems, such as in that: either security guarantee is lacking, the security level is lower, and the usage range is narrower; or, due to an additional device is purchased as needed, the cost is higher and the security risk of malicious collection of user bank card information is caused. Thus, as for the above remote payments, popularization and application are not facilitated.

US8151345B1 discloses self-authorizing cards and cellular network adapters for authorization of financial payments and other secure transactions. EP2518670A1 discloses a method for remote payment based on a mobile terminal. CN103020547A discloses a method and device for executing commands, an intelligent card and a mobile terminal.

### Content of the Invention

The technical problem solved by the embodiments of the present invention is to provide a method and apparatus for implementing a remote payment, so as to improve the security of the remote payment, and meanwhile, it is unnecessary to add a hardware apparatus and thus the cost can be saved.

To solve the above technical problem, the technical solution is adopted as follows.

A method for implementing a remote payment, is applied to a mobile terminal of which a smart card contains a USB Key, and a USB Key processing unit is disposed inside the smart card; the method includes:
sending, by a payment application client, a command related to the USB Key;
converting, by a conversion drive unit, the command related to the USB Key to a command in an Application Protocol Data Unit, APDU, format; and
receiving and reading, by the USB Key processing unit, the command in the APDU format to activate the USB Key and execute a remote payment instruction;
wherein, before the USB Key processing unit receives and reads the command in the APDU format, the method further comprises:
   receiving, by the smart card, a PIN2 code from a user, and judging whether the PIN2 code input by the user is consistent with a preset PIN2 code of the terminal; if consistent, considering that the PIN2 code input by the user is matched with the preset PIN2 code of the terminal, opening a USB Key function of the smart card to make it under an enabled state, and activating the USB Key; and
   if the input PIN2 code is not matched with the preset PIN2 code and non-match times reach preset times, prohibiting all of subsequent payment operations.

Alternatively, after the payment application client sends the command related to the USB Key, the method further includes:
judging whether the command related to the USB Key is the command in the APDU format which is capable of being identified by the USB Key processing unit; and
when the command related to the USB Key is the command in the APDU format which is capable of being identified by the USB Key processing unit, directly sending this command to the USB Key processing unit, and executing the step of receiving and reading, by the USB Key processing unit, the command in the APDU format.

Alternatively, the step of converting the command related to the USB Key to the command in the APDU format includes:
parsing the command related to the USB Key, filling parsed command information in an APDU corresponding position and filling a related parameter according to a preset APDU format,.

Alternatively, the step of receiving and reading, by the USB Key processing unit, the command in the APDU format to activate the USB Key and execute the remote payment instruction includes:
the USB Key processing unit, according to the received and read command in the APDU format, activating the USB Key, and executing an operation of an encryption, a decryption or a key pair generation corresponding to the remote payment.

Alternatively, before the payment application client sends the command related to the USB Key, the method further includes:
when the smart card is initially set, establishing an extended element file of the USB Key, and installing the payment application client based on the established extended element file;
herein, the extended element file is used for storing a certificate supporting a USB Key function.

Alternatively, after the USB Key processing unit executes the remote payment instruction corresponding to the command in the APDU format, the method further includes: feeding an execution result back to the payment application client via the conversion drive unit.

Alternatively, the command in the APDU format is transmitted via a logic channel; and
the method further includes: after feeding the execution result back to the payment application client, closing the logic channel.

An apparatus for implementing a remote payment, includes: a smart card, a conversion drive unit, and a payment application client, herein,
the payment application client is arranged to: send a command related to a USB Key;
the conversion drive unit is arranged to: after receiving the command related to the USB Key, convert the command related to the USB Key to a command in an Application Protocol Data Unit, APDU, format;
the smart card contains the USB Key, and is provided with a USB Key processing unit, herein,
the USB Key processing unit is arranged to: receive and read the command in the APDU format to activate the USB Key and execute a remote payment instruction;
the apparatus further comprising a security verification unit, arranged to:
before the USB Key processing unit receives and reads the command in the APDU format, receive a PIN2 code from a user, and judge whether the PIN2 code input by the user is consistent with a preset PIN2 code of the terminal; if consistent, consider that the PIN2 code input by the user is matched with the preset PIN2 code of the terminal, and open a USB Key function of the smart card to make it under an enabled state; and
if the input PIN2 code is not matched with the preset PIN2 code and non-match times reach preset times, prohibit all of subsequent payment operations.

Alternatively, the payment application client is further arranged to: after sending the command related to the USB Key, judge whether the command related to the USB Key is the command in the APDU format which is capable of being identified by the USB Key processing unit; and
send said command related to the USB Key directly to the USB Key processing unit when the command related to the USB Key is the command in the APDU format which is capable of being identified by the USB Key processing unit.

Alternatively, the conversion drive unit is arranged to, after receiving the command related to the USB Key, convert the command related to the USB Key to the command in the APDU format by a following way: parsing the command related to the USB Key, filling information about the parsed command related to the USB Key in an APDU corresponding position and filling a related parameter according to a preset APDU format.

Alternatively, the USB Key processing unit is arranged to receive and read the command in the APDU format to activate the USB Key and execute the remote payment instruction by a following way: receiving and reading the command in the APDU format to activate the USB Key and execute an operation of an encryption, a decryption or a key pair generation corresponding to the remote payment.

Alternatively, the apparatus further includes a setting unit, arranged to: when the smart card is initially set, establish an extended element file of the USB Key, and install the payment application client based on the established extended element file;
herein, the extended element file is used for storing a certificate supporting a USB Key function.

Alternatively, the apparatus further includes a feedback unit, arranged to: feed an execution result of executing the command in the APDU format back to the payment application client via the conversion drive unit after the USB Key processing unit executes the operation corresponding to the command in the APDU format.

Alternatively, the apparatus further includes a logic channel unit, arranged to: transmit the command in the APDU format by configuring a logic channel; and close the logic channel after the feedback unit feeds the execution result back.

Alternatively, the smart card is: a Subscriber Identity Module (SIM) card, or a Universal Subscriber Identity Module (USIM) card, or a Removable User Identity Module (R-UIM) card, or a Secure Digital (SD) card, or a chip containing a secure module built in a mobile phone.

Compared with the related art, the technical solution provided by the present invention includes that: the smart card of the mobile terminal contains the USB Key, and the USB Key processing unit is disposed inside the smart card. The technical solution further includes: sending by the payment application client the command related to the USB Key; converting by the conversion drive unit the command related to the USB Key to the command in the APDU format; and receiving and reading by the USB Key processing unit the command in the APDU format to activate the USB Key and execute the remote payment instruction. With the above technical solution, it is ensured that the remote payment is implemented securely without additional hardware cost by configuring the USB Key on the smart card of the mobile terminal and receiving from the smart card the command related to the USB Key for remote payment. Further, the user is securely verified by means of the PIN2 code, thus improving the security of the remote payment.

### Brief Description of Drawings

The accompany drawings are used to provide further understanding of the technical solution of the present application, and form a part of the specification. The accompany drawings and the embodiments of the present application are used to explain the technical solutions of the present application together, and do not form limits to the technical solution of the present application.
FIG. 1 is a flowchart of a method for implementing a remote payment according to an embodiment of the present invention;
FIG. 2 is a structure diagram of an apparatus for implementing a remote payment according to an embodiment of the present invention; and

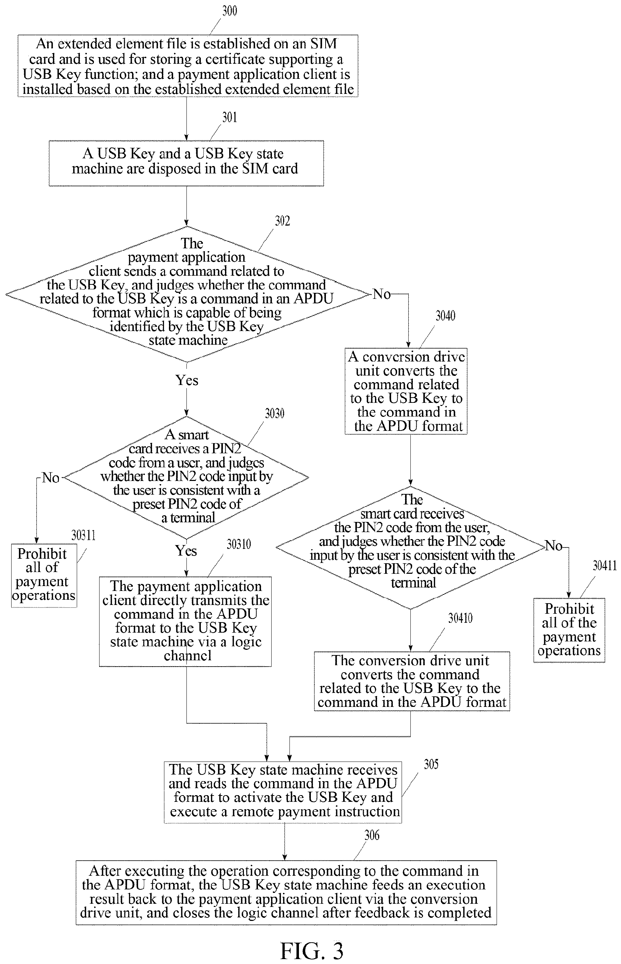

FIG. 3 is a flowchart of a method for implementing a remote payment according to an embodiment of the present invention.

### Preferred Embodiments of the Present Invention

The embodiments of the present application will be illustrated in detail below in combination with the accompany drawings. It is required to illustrate that the embodiments in the present application and the features in the embodiments can be randomly combined with each other without conflict.

There are multiple identity authentication technologies commonly used in the mobile internet at present. These identity authentication technologies have different operation modes, different security levels, and may be applied to different application scenarios. These identity authentication technologies include a static account password, a short message password, WAP authentication, a dynamic password and a file digital certificate, etc. The file digital certificate is in the highest security level and meanwhile has a bidirectional authentication mechanism and non-repudiation, thereby the file digital certificate is an authentication mode which is more suitable for a high-security internet application. A USB Key authentication mode used by a network bank is the most widespread mode of security authentication via a digital certificate currently. Compared with the file digital certificate mode, a certificate of the USB Key authentication mode and a key of a user are stored by using hardware, and therefore illegal access can be avoided.

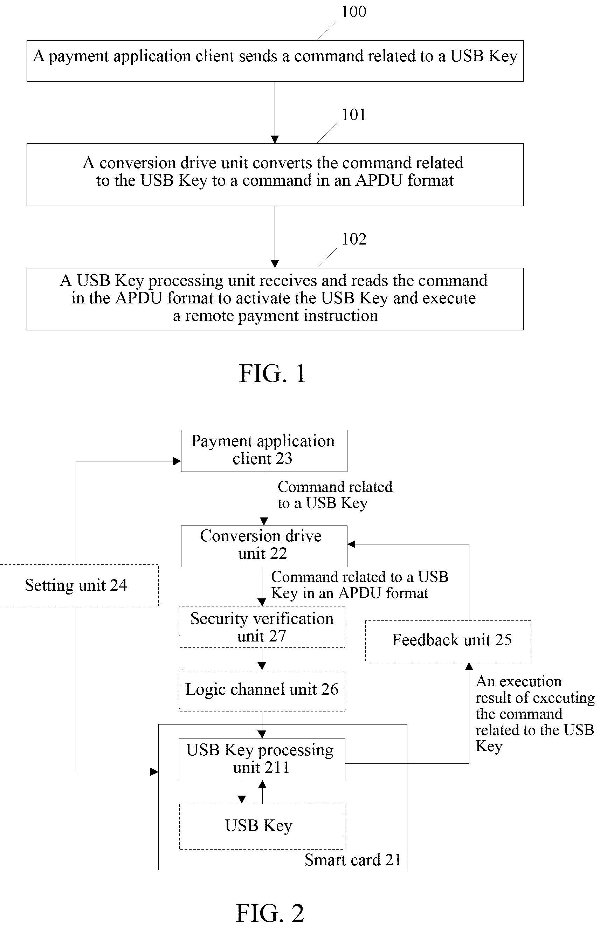

FIG. 1 is a flowchart of a method for implementing a remote payment according to the present invention. Herein, a smart card of a mobile terminal contains a USB Key, and a USB Key processing unit is disposed inside the smart card. As shown in FIG. 1, the method includes the following steps.

Step 100: a payment application client sends a command related to the USB Key.

Before this step, the method further includes that:
when the smart card is initially set, an extended element file of the USB Key is established, and the payment application client based on the established extended element file is installed.

Herein, the extended element file is used for storing a certificate supporting a USB Key function.

It should be noted that, the command related to the USB Key refers to a command related to payment, such as encryption, decryption, and a key pair generation, etc., involved in a remote payment process. The USB Key is a hardware device of a USB interface. It is internally provided with a microprocessor or a smart chip, stores a private key of a user and a digital certificate, and authenticates the identity of the user by using a public key algorithm built in the USB Key. Because the private key of the user is stored in a password lock and cannot be read in any modes theoretically, the security of user authentication is ensured.

Step 101: the conversion drive unit converts the command related to the USB Key to a command in an APDU format.

In this step, the detail step of converting the command related to the USB Key to the command in the APDU format specifically includes parsing the command related to the USB Key and filling the parsed command information in an APDU corresponding position and a related parameter is filled according to a preset APDU format.

It should be noted that that an APDU complies with an ISO/IEC7816 standard, and is commonly known by those skilled in the art. An APDU command includes a command header and a command body. Herein the command header consists of five bytes. The first byte (instruction class CLA) is used to identify a specific application program class of an instruction. The second byte (instruction code INS byte) is used to indicate a specific instruction in a certain instruction class marked by the first byte, and the specific instruction is configured to complete a specific function. The fifth byte is used to store a total length of the APDU command body. The third and fourth bytes may be defined by the user self as needed, and the APDU command body is used to store a data file. According to the present invention, the APDU command is expanded, two parameters CLA and INS in the APDU command are defined, an encryption function and a decryption function share the parameter INS, parameters P1 and P2 are used for distinguishing, specific parameters are shared, and belong to common general knowledge of those skilled in the art together with P1 and P2, and these contents are included in a chapter 9-9.1 in a 37^{th} page in a 3GPP11.11 protocol. The step of parsing the command related to the USB Key, filling the parsed information and filling the related parameter according to the APDU format falls within conventional technical means of those skilled in the art.

Step 102: the USB Key processing unit receives and reads the command in the APDU format to activate the USB Key and execute a remote payment instruction.

After the payment application client sends the command related to the USB Key, the method of the present invention further includes: judging whether the command related to the USB Key is the command in the APDU format which is capable of being identified by the USB Key processing unit; and
when the command related to the USB Key is the command in the APDU format which is capable of being identified by the USB Key processing unit, directly sending said command to the USB Key processing unit (that is, step 101 is omitted), and executing the step of reading by the USB Key processing unit the command in the APDU format. When the command related to the USB Key is not the command in the APDU format which is capable of being identified by the USB Key processing unit, step 102 is executed. Here, how to judge whether the command related to the USB Key is the command in the APDU format which is capable of being identified by the USB Key processing unit is a conventional technical means of those skilled in the art.

It should be noted that the related mobile terminal does not include contents of performing the remote payment by setting the USB Key. Therefore, at present the mobile terminal does not have the command in the APDU format and supporting a remote payment function.

After the USB Key processing unit executes the operation corresponding to the command in the APDU format, the method of the present invention further includes: feeding an execution result back to the payment application client via the conversion drive unit.

Alternatively, the command in the APDU format is transmitted via a logic channel.

The method of the present invention further includes: after feeding the execution result back to the payment application client, closing the logic channel is closed.

It should be noted that the logic channel involved in transmission of the command in the APDU format via the logic channel is a channel which is well-known by those skilled in the art and used to securely transmit data information. This part of contents are recorded on page 32, section 6.4.27 in 3GPP 31.111.

The smart card in the present invention is: an SIM card, or a USIM card, or an R-UIM card, or an SD card, or a chip which is built in a mobile phone and contains a secure module. Certainly, other corresponding cards, with the same functions to the above cards, belong to the smart card of the present invention. Here, examples are only made for common smart cards.

The step of the USB Key processing unit receiving and reading the command in the APDU format to activate the USB Key and execute the remote payment instruction specifically includes: the USB Key processing unit, according to the received and read command in the APDU format, activating the USB Key, and executing an operation of an encryption, a decryption or a key pair generation corresponding to the remote payment.

Before the USB Key processing unit receives and reads the command in the APDU format, the method further includes: the smart card receiving a PIN2 code from the user, and judging whether the PIN2 code input by the user is consistent with a preset PIN2 code of the terminal, if consistent, considering that the PIN2 code input by the user is matched with the preset PIN2 code of the terminal, and opening a USB Key function of the smart card to make it under an enabled state.

If the input PIN2 code is not matched with the preset PIN2 code and non-match times reach preset times, all of subsequent payment operations are prohibited.

It should be noted that a process of a verification of the PIN2 code belongs to the verification function of the smart card itself. Because the USB Key is not set in the card according to the related remote payment, the verification function of the PIN2 code is only a technical solution for protecting communication information of the user, and is rarely executed and used by the user. In order to make the remote payment safer, when the USB Key is set inside the smart card, verification is executed by means of the PIN2 code, so the security of remote payment may be improved. In the related art, the communication information of the user is protected by means of the PIN2 code, the fixed times is generally set to count input errors. The match times in the present application is set according to an actual situation. When the remote payment requires a higher security level, a number value of preset times is smaller, for example, it is only allowed for two input errors. When the remote payment requires a general security level, a larger number value may be set, to prevent the PIN2 code from being locked due to a personal reason of a false operation.

FIG. 2 is a structure diagram of an apparatus for implementing a remote payment according to the present invention. As shown in FIG. 2, the apparatus includes: a smart card 21, a conversion drive unit 22, and a payment application client 23.

The payment application client 23 is arranged to: send a command related to a USB Key.

The payment application client 23 is further arranged to: after sending the command related to the USB Key, judge whether the command related to the USB Key is the command in the APDU format which is capable of being identified by a USB Key processing unit of the smart card 21;
directly send the command related to the USB Key to the USB Key processing unit when the command is the command in the APDU format which is capable of being identified by the USB Key processing unit of the smart card 21; and
send the command related to the USB Key to the conversion drive unit when the command related to the USB Key is not the command in the APDU format which is capable of being identified by the USB Key processing unit of the smart card 21.

The conversion drive unit 22 is arranged to: receive the command related to the USB Key, and convert the command related to the USB Key to a command in an APDU format.

The conversion drive unit is arranged to, convert the command related to the USB Key to the command in the APDU format by a following way: parsing the command related to the USB Key, filling information about the parsed command related to the USB Key in an APDU corresponding position and filling a related parameter according to a preset APDU format.

The smart card 21 contains the USB Key, and is provided with the USB Key processing unit 211.

The USB Key processing unit 211 is arranged to: receive and read the command in the APDU format to activate the USB Key and execute a remote payment instruction.

The USB Key processing unit 211 is arranged to receive and read the command in the APDU format to activate the USB Key and execute the remote payment instruction by a following way: receiving and reading the command in the APDU format to activate the USB Key and execute an operation of an encryption, a decryption or a key pair generation corresponding to the remote payment.

The smart card 21 is: an SIM card, or a USIM card, or an R-UIM card, or an SD card, or a chip which is built in a mobile phone and contains a secure module. Here, the a chip which is built in a mobile phone and contains the secure module refers to a hardware dedicated chip adopted in the field of security application and having a secure function requirement. Commonly, there are some common dedicated chips used for security by financial mechanisms, which belongs to common general knowledge for those skilled in the art. Other cards with the same functions to the above cards belong to the smart card of the present invention also. Here, examples are only made for common smart cards.

The apparatus of the embodiment of the present invention further includes a setting unit 24, arranged to: when the smart card is initially set, establish an extended element file of the USB Key, and install the payment application client 23 based on the established extended element file;
herein, the extended element file is used for storing a certificate supporting a USB Key function.

The apparatus of the embodiment of the present invention further includes a feedback unit 25, arranged to: feed an execution result of executing the command in the APDU format back to the payment application client 23 via the conversion drive unit 22 after the USB Key processing unit 211 executes the operation corresponding to the command in the APDU format.

The apparatus of the embodiment of the present invention further includes a logic channel unit 26, arranged to: transmit the command in the APDU format by configuring a logic channel; and close the logic channel after the feedback unit 25 completes feedback.

The apparatus of the embodiment of the present invention further includes a security verification unit 27, arranged to: before the USB Key processing unit 211 receives and reads the command in the APDU format, receive a PIN2 code from a user itself, and judge whether the PIN2 code input by the user is consistent with a preset PIN2 code of the terminal; if consistent, consider that the PIN2 code input by the user is matched with the preset PIN2 code of the terminal, and open a USB Key function of the smart card 21 to make it under an enabled state; and if the input PIN2 code is not matched with the preset PIN2 code and non-match times reach preset times, prohibit all of subsequent payment operations.

The present invention is clearly illustrated in detail by specific embodiments below, and the embodiments are not intended to limit the scope of protection of the present invention.

### Embodiment 1

In this embodiment, a smart card is set as an SIM. The embodiment is illustrated by taking the SIM as an example.

Step 300: An extended element file (e.g., Element File (EF) USB Key) is established on an SIM card, and is used for storing a certificate supporting a USB Key function. A payment application client is installed based on the established extended element file.

Step 301: A USB Key and a USB Key processing unit are disposed in the SIM card.

Step 302: The payment application client sends a command related to the USB Key, and judges whether the command related to the USB Key is a command in an APDU format which is capable of being identified by the USB Key processing unit. If yes, step 3030 is executed, otherwise, step 3040 is executed.

Step 3030: The smart card receives a PIN2 code from a user, and judges whether the PIN2 code input by the user is consistent with a preset PIN2 code of a terminal. If consistent, it is considered that the PIN2 code input by the user is matched with the preset PIN2 code of the terminal, and the USB Key function of the smart card is opened to make it under an enabled state. Step 30310 is executed.

If the input PIN2 code is not matched with the preset PIN2 code and non-match times reach preset times, all of subsequent payment operations are prohibited. Step 30311 is executed.

Step 30310: The payment application client directly transmits the command in the APDU format to the USB Key processing unit via a logic channel.

Step 30311: All of the payment operations are prohibited.

Step 3040: A conversion drive unit converts the command related to the USB Key to the command in the APDU format. Here, the conversion drive unit converting the command related to the USB Key to the command in the APDU format specifically includes: the conversion drive unit parses the command related to the USB Key, according to the preset APDU format, fills parsed command information in an APDU corresponding position and fills the related parameter.

Step 3041: The smart card receives the PIN2 code from the user, and judges whether the PIN2 code input by the user is consistent with the preset PIN2 code of the terminal. If consistent, it is considered that the PIN2 code input by the user is matched with the preset PIN2 code of the terminal, and the USB Key function of the smart card is opened to make it under the enabled state. Step 30410 is executed.

If the input PIN2 code is not matched with the preset PIN2 code and the non-match times reach the preset times, all of the subsequent payment operations are prohibited. Step 30411 is executed.

Step 30410: The conversion drive unit sends the command converted to be in the APDU format to the USB Key processing unit.

After step 30310 or step 30410, step 305 is executed.

Step 30411: All of the payment operations are prohibited.

Step 305: The USB Key processing unit receives and reads the command in the APDU format to activate the USB Key and execute a remote payment instruction, including: an encryption operation, a decryption operation or a key pair generation operation.

Step 306: After executing the operation corresponding to the command in the APDU format, the USB Key processing unit feeds an execution result back to the payment application client via the conversion drive unit, and closes the logic channel after feedback is completed.

Although the implementation mode disclosed by the present application is mentioned above, the contents are only implementation modes adopted to facilitate understanding of the present application, and not intended to limit the present application, such as a specific implementation method in the implementation mode of the present invention. Those skilled in the art within which the present application falls may made any modifications and changes in implementation forms and details without departing from the spirit and scope disclosed by the present application. However, the patent protection scope of the present application should refer to the scope defined by the appended claims.

### Industrial Applicability

In the above technical solution, the USB Key is set on the smart card of the mobile terminal, and the smart card receives the command related to the USB Key for remote payment, thus ensuring that the remote payment is implemented securely without the additional hardware cost. Further, the user is securely verified by means of the PIN2 code, thus improving the security of the remote payment. Therefore, the present invention has strong industrial applicability.

## Claims

1. A method for implementing a remote payment, applied to a mobile terminal of which a smart card contains a USB Key, a USB Key processing unit being disposed inside the smart card, the method being **characterized by** comprising:
Sending (100), by a payment application client, a command related to the USB Key;
converting (101), by a conversion drive unit, the command related to the USB Key to a command in an Application Protocol Data Unit, APDU, format; and
receiving and reading (102), by the USB Key processing unit, the command in the APDU format to activate the USB Key and execute a remote payment instruction;
wherein, before the USB Key processing unit receives and reads the command in the APDU format, the method further comprises:
receiving, by the smart card, a PIN2 code from a user, and judging whether the PIN2 code input by the user is consistent with a preset PIN2 code of the terminal; if consistent, considering that the PIN2 code input by the user is matched with the preset PIN2 code of the terminal, opening a USB Key function of the smart card to make it under an enabled state, and activating the USB Key; and
if the input PIN2 code is not matched with the preset PIN2 code and non-match times reach preset times, prohibiting all of subsequent payment operations.

2. The method according to claim 1, wherein, after the payment application client sends the command related to the USB Key, the method further comprises:
judging whether the command related to the USB Key is the command in the APDU format which is capable of being identified by the USB Key processing unit; and
when the command related to the USB Key is the command in the APDU format which is capable of being identified by the USB Key processing unit, directly sending said command to the USB Key processing unit, and executing the step of receiving and reading, by the USB Key processing unit, the command in the APDU format.

3. The method according to claim 1 or 2, wherein, the step of converting the command related to the USB Key to the command in the APDU format comprises:
parsing the command related to the USB Key, filling parsed command information in an APDU corresponding position and filling a related parameter.

4. The method according to claim 1 or 2, wherein, the step of receiving and reading, by the USB Key processing unit, the command in the APDU format to activate the USB Key and execute the remote payment instruction comprises:
the USB Key processing unit, according to the received and read command in the APDU format, activating the USB Key, and executing an operation of an encryption, a decryption or a key pair generation corresponding to the remote payment.

5. The method according to claim 4, wherein, before the payment application client sends the command related to the USB Key, the method further comprises:
when the smart card is initially set, establishing an extended element file of the USB Key, and installing the payment application client based on the established extended element file;
wherein, the extended element file is used for storing a certificate supporting a USB Key function;
preferably, wherein, after the USB Key processing unit executes the remote payment instruction corresponding to the command in the APDU format, the method further comprises: feeding an execution result back to the payment application client via the conversion drive unit.

6. The method according to claim 5, wherein, the command in the APDU format is transmitted via a logic channel; and
the method further comprises: after feeding the execution result back to the payment application client, closing the logic channel.

7. An apparatus for implementing a remote payment, comprising: a smart card (21), a conversion drive unit (22), and a payment application client (23), **characterized in that**,
the payment application client (23) is arranged to: send a command related to a USB Key;
the conversion drive unit (22) is arranged to: after receiving the command related to the USB Key, convert the command related to the USB Key to a command in an Application Protocol Data Unit, APDU, format;
the smart card (21) contains the USB Key, and is provided with a USB Key processing unit (211), wherein,
the USB Key processing unit (211) is arranged to: receive and read the command in the APDU format to activate the USB Key and execute a remote payment instruction;
the apparatus further comprising a security verification unit (27), arranged to:
before the USB Key processing unit receives and reads the command in the APDU format, receive a PIN2 code from a user, and judge whether the PIN2 code input by the user is consistent with a preset PIN2 code of the terminal; if consistent, consider that the PIN2 code input by the user is matched with the preset PIN2 code of the terminal, and open a USB Key function of the smart card to make it under an enabled state; and
if the input PIN2 code is not matched with the preset PIN2 code and non-match times reach preset times, prohibit all of subsequent payment operations.

8. The apparatus according to claim 7, wherein, the payment application client (23) is further arranged to: after sending the command related to the USB Key, judge whether the command related to the USB Key is the command in the APDU format which is capable of being identified by the USB Key processing unit; and
send said command related to the USB Key directly to the USB Key processing unit when the command related to the USB Key is the command in the APDU format which is capable of being identified by the USB Key processing unit.

9. The apparatus according to claim 7 or 8, wherein, the conversion drive unit (22) is arranged to, after receiving the command related to the USB Key, convert the command related to the USB Key to the command in the APDU format by a following way: parsing the command related to the USB Key, filling information about the parsed command related to the USB Key in an APDU corresponding position and filling a related parameter according to a preset APDU format.

10. The apparatus according to claim 7 or 8, wherein, the USB Key processing unit (211) is arranged to receive and read the command in the APDU format to activate the USB Key and execute the remote payment instruction by a following way: receiving and reading the command in the APDU format to activate the USB Key and execute an operation of an encryption, a decryption or a key pair generation corresponding to the remote payment.

11. The apparatus according to claim 10, the apparatus further comprising a setting unit (24), arranged to: when the smart card is initially set, establish an extended element file of the USB Key, and install the payment application client based on the established extended element file;
wherein, the extended element file is used for storing a certificate supporting a USB Key function;
preferably, the apparatus further comprising a feedback unit, arranged to: feed an execution result of executing the command in the APDU format back to the payment application client via the conversion drive unit after the USB Key processing unit executes the operation corresponding to the command in the APDU format.

12. The apparatus according to claim 11, the apparatus further comprising a logic channel unit (26), arranged to: transmit the command in the APDU format by configuring a logic channel; and close the logic channel after the feedback unit feeds the execution result back.

13. The apparatus according to claim 7, wherein, the smart card is: a Subscriber Identity Module (SIM) card, or a Universal Subscriber Identity Module (USIM) card, or a Removable User Identity Module (R-UIM) card, or a Secure Digital (SD) card, or a chip which is built in a mobile phone and contains a secure module.

## Patentansprüche

1. Verfahren zum Implementieren einer Fernzahlung, angewandt bei einem mobilen Endgerät, von dem eine Smartcard einen USB-Schlüssel enthält, wobei eine Verarbeitungseinheit des USB-Schlüssels innerhalb der Smartcard angeordnet ist, wobei das Verfahren **dadurch gekennzeichnet ist, dass** es Folgendes umfasst:
Senden (100) eines Befehls bezüglich des USB-Schlüssels durch einen Zahlungsanwendungs-Client;
Umwandeln (101) des Befehls bezüglich des USB-Schlüssels in einen Befehl in einem Format einer Anwendungsprotokolldateneinheit (APDU) durch eine Umwandlungsansteuerungseinheit; und
Empfangen und Lesen (102) des Befehls im APDU-Format durch die Verarbeitungseinheit des USB-Schlüssels, um den USB-Schlüssel zu aktivieren und eine Fernzahlungsanweisung auszuführen;
wobei das Verfahren, bevor die Verarbeitungseinheit des USB-Schlüssels den Befehl im APDU-Format empfängt und liest, ferner Folgendes umfasst:
Empfangen eines PIN2-Codes von einem Benutzer durch die Smartcard und Bewerten, ob die Eingabe des PIN2-Codes durch den Benutzer zu einem vorab festgelegten PIN2-Code des Endgeräts passt; falls passend, Berücksichtigen, dass die Eingabe des PIN2-Codes durch den Benutzer mit dem vorab festgelegten PIN2-Code des Endgeräts übereinstimmt, Öffnen einer Funktion des USB-Schlüssels der Smartcard, um sie in einen eingeschalteten Zustand zu versetzen, und Aktivieren des USB-Schlüssels; und
falls der eingegebene PIN2-Code nicht mit dem vorab eingestellten PIN2-Code übereinstimmt und Auftreten der Nichtübereinstimmung vorab festgelegte Male erreicht, Unterbinden aller nachfolgenden Zahlungsvorgänge.

2. Verfahren nach Anspruch 1, wobei das Verfahren, nachdem der Zahlungsanwendungs-Client den Befehl bezüglich des USB-Schlüssels sendet, ferner Folgendes umfasst:
Bewerten, ob der Befehl bezüglich des USB-Schlüssels der Befehl im APDU-Format ist, der durch die Verarbeitungseinheit des USB-Schlüssels identifiziert werden kann; und
wenn der Befehl bezüglich des USB-Schlüssels der Befehl im APDU-Format ist, der durch die Verarbeitungseinheit des USB-Schlüssels identifiziert werden kann, direktes Senden des Befehls an die Verarbeitungseinheit des USB-Schlüssels und Ausführen des Schritts des Empfangens und Lesens des Befehls im APDU-Format durch die Verarbeitungseinheit des USB-Schlüssels.

3. Verfahren nach Anspruch 1 oder 2, wobei der Schritt des Umwandelns des Befehls bezüglich des USB-Schlüssels in den Befehl im APDU-Format Folgendes umfasst:
Parsen des Befehls bezüglich des USB-Schlüssels, Füllen von geparsten Befehlsinformationen in eine der APDU entsprechenden Position und Füllen eines zugehörigen Parameters.

4. Verfahren nach Anspruch 1 oder 2, wobei der Schritt des Empfangens und Lesens des Befehls im APDU-Format durch die Verarbeitungseinheit des USB-Schlüssels, um den USB-Schlüssel zu aktivieren und die Fernzahlungsanweisung auszuführen, Folgendes umfasst:
Aktivieren des USB-Schlüssels durch die Verarbeitungseinheit des USB-Schlüssels gemäß dem empfangenen und gelesenen Befehl im APDU-Format und Ausführen eines Vorgangs einer Verschlüsselung, einer Entschlüsselung oder einer Schlüsselpaarerzeugung entsprechend der Fernzahlung.

5. Verfahren nach Anspruch 4, wobei das Verfahren, bevor der Zahlungsanwendungs-Client den Befehl bezüglich des USB-Schlüssels sendet, ferner Folgendes umfasst:
wenn die Smartcard zu Beginn eingestellt wird, Einrichten einer erweiterten Elementdatei des USB-Schlüssels und Installieren des Zahlungsanwendungs-Clients auf Grundlage der eingerichteten erweiterten Elementdatei;
wobei die erweiterte Elementdatei verwendet wird, um ein Zertifikat zu speichern, das eine Funktion des USB-Schlüssels unterstützt;
wobei das Verfahren, nachdem die Verarbeitungseinheit des USB-Schlüssels die Fernzahlungsanweisung gemäß dem Befehl im APDU-Format ausführt, vorzugsweise ferner Folgendes umfasst:
Rückmelden eines Ausführungsergebnisses an den Zahlungsanwendungs-Client über die Umwandlungsansteuerungseinheit.

6. Verfahren nach Anspruch 5, wobei der Befehl im APDU-Format über einen Logikkanal übertragen wird; und
das Verfahren ferner Folgendes umfasst: nach dem Rückmelden des Ausführungsergebnisses an den Zahlungsanwendungs-Client, Schließen des Logikkanals.

7. Vorrichtung zum Implementieren einer Fernzahlung, umfassend: eine Smartcard (21), eine Umwandlungsansteuerungseinheit (22) und einen Zahlungsanwendungs-Client (23), **dadurch gekennzeichnet, dass** der Zahlungsanwendungs-Client (23) für Folgendes angeordnet ist:
Senden eines Befehls bezüglich des USB-Schlüssels;
die Umwandlungsansteuerungseinheit (22) für Folgendes angeordnet ist: Umwandeln des Befehls bezüglich des USB-Schlüssels in einen Befehl in einem Format einer Anwendungsprotokolldateneinheit (APDU) nach dem Empfangen des Befehls bezüglich des USB-Schlüssels;
die Smartcard (21) den USB-Schlüssel enthält und mit einer Verarbeitungseinheit (211) des USB-Schlüssels ausgestattet ist,
wobei
die Verarbeitungseinheit (211) des USB-Schlüssels für Folgendes angeordnet ist: Empfangen und Lesen des Befehls im APDU-Format, um den USB-Schlüssel zu aktivieren und eine Fernzahlungsanweisung auszuführen;
wobei die Vorrichtung ferner eine Sicherheitsverifizierungseinheit (27) umfasst, die für Folgendes angeordnet ist:
bevor die Verarbeitungseinheit des USB-Schlüssels den Befehl im APDU-Format empfängt und liest, Empfangen eines PIN2-Codes von einem Benutzer und Bewerten, ob die Eingabe des PIN2-Codes durch den Benutzer zu einem vorab festgelegten PIN2-Code des Endgeräts passt; falls passend, Berücksichtigen, dass die Eingabe des PIN2-Codes durch den Benutzer mit dem vorab festgelegten PIN2-Code des Endgeräts übereinstimmt und Öffnen einer Funktion des USB-Schlüssels der Smartcard, um sie in einen eingeschalteten Zustand zu versetzen; und
falls der eingegebene PIN2-Code nicht mit dem vorab eingestellten PIN2-Code übereinstimmt und Auftreten der Nichtübereinstimmung vorab festgelegte Male erreicht, Unterbinden aller nachfolgenden Zahlungsvorgänge.

8. Vorrichtung nach Anspruch 7, wobei der Zahlungsanwendungs-Client (23) ferner für Folgendes angeordnet ist: nach dem Senden des Befehls bezüglich des USB-Schlüssels, Bewerten, ob der Befehl bezüglich des USB-Schlüssels der Befehl im APDU-Format ist, der durch die Verarbeitungseinheit des USB-Schlüssels identifiziert werden kann; und
Senden des Befehls bezüglich des USB-Schlüssels direkt an die Verarbeitungseinheit des USB-Schlüssels, wenn der Befehl bezüglich des USB-Schlüssels der Befehl im APDU-Format ist, der durch die Verarbeitungseinheit des USB-Schlüssels identifiziert werden kann.

9. Vorrichtung nach Anspruch 7 oder 8, wobei die Umwandlungsansteuerungseinheit (22) angeordnet ist, um nach dem Empfangen des Befehls bezüglich des USB-Schlüssels den Befehl bezüglich des USB-Schlüssels in folgender Weise in den Befehl im APDU-Format umzuwandeln: Parsen des Befehls bezüglich des USB-Schlüssels, Füllen von Informationen über den geparsten Befehl bezüglich des USB-Schlüssels in eine der APDU entsprechenden Position und Füllen eines zugehörigen Parameters gemäß dem vorab festgelegten APDU-Format.

10. Vorrichtung nach Anspruch 7 oder 8, wobei die Verarbeitungseinheit (211) des USB-Schlüssels angeordnet ist, um den Befehl im APDU-Format zu empfangen und zu lesen, um den USB-Schlüssel in folgender Weise zu aktivieren und die Fernzahlungsanweisung auszuführen: Empfangen und Lesen des Befehls im APDU-Format, um den USB-Schlüssel zu aktivieren und einen Vorgang einer Verschlüsselung, einer Entschlüsselung oder einer Schlüsselpaarerzeugung entsprechend der Fernzahlung auszuführen.

11. Vorrichtung nach Anspruch 10, wobei die Vorrichtung ferner eine Einstellungseinheit (24) umfasst, die für Folgendes angeordnet ist: wenn die Smartcard zu Beginn eingestellt wird, Einrichten einer erweiterten Elementdatei des USB-Schlüssels und Installieren des Zahlungsanwendungs-Clients auf Grundlage der eingerichteten erweiterten Elementdatei;
wobei die erweiterte Elementdatei verwendet wird, um ein Zertifikat zu speichern, das eine Funktion des USB-Schlüssels unterstützt;
wobei die Vorrichtung vorzugsweise ferner eine Feedbackeinheit umfasst, die für Folgendes angeordnet ist: Rückmelden eines Ausführungsergebnisses des Ausführens des Befehls im APDU-Format an den Zahlungsanwendungs-Client über die Umwandlungsansteuerungseinheit, nachdem die Verarbeitungseinheit des USB-Schlüssels den Vorgang entsprechend dem Befehl im APDU-Format ausführt.

12. Vorrichtung nach Anspruch 11, wobei die Vorrichtung ferner eine Logikkanaleinheit (26) umfasst, die für Folgendes angeordnet ist: Übertragen des Befehls im APDU-Format durch Konfigurieren eines Logikkanals; und Schließen des Logikkanals, nachdem die Feedbackeinheit das Ausführungsergebnis rückmeldet.

13. Vorrichtung nach Anspruch 7, wobei die Smartcard Folgendes ist: eine Teilnehmeridentitätsmodul (SIM)-Karte oder eine universelle Teilnehmeridentitätsmodul (USIM)-Karte oder eine entfernbare Benutzeridentitätsmodul (R-UIM)-Karte oder eine sichere digitale (SD) Karte oder ein Chip, der in ein Mobiltelefon eingebaut ist und ein sicheres Modul enthält.

## Revendications

1. Procédé pour la mise en oeuvre d'un paiement à distance, appliqué à un terminal mobile dont une carte à puce contient une clé USB, une unité de traitement de clé USB étant disposée à l'intérieur de la carte à puce, le procédé étant **caractérisé en ce qu'**il comprend :
l'envoi (100), par un client d'application de paiement, d'une commande associée à la clé USB ;
la conversion (101), par une unité de commande de conversion, de la commande associée à la clé USB en une commande au format d'unité de données de protocole d'application, APDU ; et
la réception et la lecture (102), par l'unité de traitement de clé USB, de la commande au format APDU pour activer la clé USB et exécuter une instruction de paiement à distance ;
dans lequel, avant que l'unité de traitement de clé USB reçoive et lise la commande au format APDU, le procédé comprend en outre :
la réception, par la carte à puce, d'un code PIN2 d'un utilisateur, et le fait de déterminer si le code PIN2 entré par l'utilisateur est conforme à un code PIN2 prédéfini du terminal ; s'il est conforme, en considérant que le code PIN2 entré par l'utilisateur correspond au code PIN2 prédéfini du terminal, l'ouverture d'une fonction de clé USB de la carte à puce pour la rendre dans un état activé, et l'activation de la clé USB ; et
si le code PIN2 entré ne correspond pas au code PIN2 prédéfini et que les temps de non-correspondance atteignent les temps prédéfinis, l'interdiction de toutes les opérations de paiement ultérieures.

2. Procédé selon la revendication 1, dans lequel, après que le client d'application de paiement a envoyé la commande associée à la clé USB, le procédé comprend en outre :
le fait de déterminer si la commande associée à la clé USB est la commande au format APDU qui peut être identifiée par l'unité de traitement de clé USB ; et
lorsque la commande associée à la clé USB est la commande au format APDU qui peut être identifiée par l'unité de traitement de clé USB, l'envoi direct de ladite commande à l'unité de traitement de clé USB, et l'exécution de l'étape de réception et de lecture par l'unité de traitement de clé USB, de la commande au format APDU.

3. Procédé selon la revendication 1 ou 2, dans lequel l'étape de conversion de la commande associée à la clé USB en commande au format APDU comprend :
l'analyse de la commande associée à la clé USB, la saisie des informations de la commande analysée dans une position correspondante de l'APDU et la saisie d'un paramètre associé.

4. Procédé selon la revendication 1 ou 2, dans lequel l'étape de réception et de lecture, par l'unité de traitement de clé USB, de la commande au format APDU pour activer la clé USB et exécuter l'instruction de paiement à distance comprend :
l'unité de traitement de clé USB, en fonction de la commande reçue et lue au format APDU, activant la clé USB et exécutant une opération de chiffrement, de déchiffrement ou de génération d'une paire de clés correspondant au paiement à distance.

5. Procédé selon la revendication 4, dans lequel, avant que le client d'application de paiement envoie la commande associée à la clé USB, le procédé comprend en outre :
lorsque la carte à puce est initialement définie, l'établissement d'un fichier d'élément étendu de la clé USB et l'installation du client d'application de paiement sur la base du fichier d'élément étendu établi ;
dans lequel, le fichier d'élément étendu est utilisé pour stocker un certificat prenant en charge une fonction de clé USB ;
de préférence, dans lequel, après que l'unité de traitement de clé USB a exécuté l'instruction de paiement à distance correspondant à la commande au format APDU, le procédé comprend en outre : le renvoi d'un résultat d'exécution au client d'application de paiement par l'intermédiaire de l'unité de commande de conversion.

6. Procédé selon la revendication 5, dans lequel la commande au format APDU est transmise par l'intermédiaire d'un canal logique ; et
le procédé comprend en outre : après le renvoi du résultat d'exécution au client d'application de paiement, la fermeture du canal logique.

7. Appareil pour la mise en oeuvre d'un paiement à distance, comprenant : une carte à puce (21), une unité de commande de conversion (22) et un client d'application de paiement (23), **caractérisé en ce que**,
le client d'application de paiement (23) est conçu pour :
envoyer une commande associée à une clé USB ;
l'unité de commande de conversion (22) est conçue pour : après réception de la commande associée à la clé USB, convertir la commande associée à la clé USB en une commande au format d'unité de données de protocole d'application, APDU ;
la carte à puce (21) contient la clé USB et est équipée d'une unité de traitement de clé USB (211) dans lequel,
l'unité de traitement de clé USB (211) est conçue pour : recevoir et lire la commande au format APDU pour activer la clé USB et exécuter une instruction de paiement à distance ;
l'appareil comprenant en outre une unité de vérification de sécurité (27), conçue pour :
avant que l'unité de traitement de clé USB reçoive et lise la commande au format APDU, recevoir un code PIN2 d'un utilisateur et déterminer si le code PIN2 entré par l'utilisateur est conforme à un code PIN2 prédéfini du terminal ; s'il est conforme, considérer que le code PIN2 entré par l'utilisateur correspond au code PIN2 prédéfini du terminal et ouvrir une fonction de clé USB de la carte à puce pour la rendre dans un état activé ; et
si le code PIN2 entré ne correspond pas au code PIN2 prédéfini et que les temps de non-correspondance atteignent les temps prédéfinis, interdire toutes les opérations de paiement ultérieures.

8. Appareil selon la revendication 7, dans lequel le client d'application de paiement (23) est en outre conçu pour : après l'envoi de la commande associée à la clé USB, déterminer si la commande associée à la clé USB est la commande au format APDU qui peut être identifiée par l'unité de traitement de clé USB ;
et
envoyer ladite commande associée à la clé USB directement à l'unité de traitement de clé USB lorsque la commande associée à la clé USB est la commande au format APDU qui peut être identifiée par l'unité de traitement de clé USB.

9. Appareil selon la revendication 7 ou 8, dans lequel l'unité de commande de conversion (22) est conçue pour, après réception de la commande associée à la clé USB, convertir la commande associée à la clé USB en une commande au format APDU de la manière suivante : analyse de la commande associée à la clé USB, saisie d'informations sur la commande analysée associée à la clé USB dans une position correspondante de l'APDU et saisie d'un paramètre associé en fonction du format APDU prédéfini.

10. Appareil selon la revendication 7 ou 8, dans lequel l'unité de traitement de clé USB (211) est conçue pour recevoir et lire la commande au format APDU pour activer la clé USB et exécuter l'instruction de paiement à distance de la manière suivante : réception et lecture de la commande au format APDU pour activer la clé USB et exécuter une opération de chiffrement, de déchiffrement ou de génération d'une paire de clés correspondant au paiement à distance.

11. Appareil selon la revendication 10, l'appareil comprenant en outre une unité de réglage (24), conçue pour : lorsque la carte à puce est initialement définie, établir un fichier d'élément étendu de la clé USB et installer le client d'application de paiement sur la base du fichier d'élément étendu établi ;
dans lequel, le fichier d'élément étendu est utilisé pour stocker un certificat prenant en charge une fonction de clé USB ;
de préférence, l'appareil comprenant en outre une unité de renvoi, conçue pour : renvoyer au client d'application de paiement un résultat d'exécution de l'exécution de la commande au format APDU par l'intermédiaire de l'unité de commande de conversion après que l'unité de traitement de clé USB a exécuté l'opération correspondant à la commande au format APDU.

12. Appareil selon la revendication 11, l'appareil comprenant en outre une unité de canal logique (26), conçue pour : transmettre la commande au format APDU en configurant un canal logique ; et fermer le canal logique après que l'unité de renvoi a renvoyé le résultat d'exécution.

13. Appareil selon la revendication 7, dans lequel la carte à puce est : une carte de module d'identité d'abonné (SIM), ou une carte de module d'identité d'abonné universel (USIM), ou une carte de module d'identité d'abonné amovible (R-UIM), ou une carte numérique sécurisée (SD) ou une puce intégrée dans un téléphone portable et contenant un module sécurisé.
